# EUROPÄISCHE PATENTSCHRIFT

(11) **EP 0 703 388 B1**
(45) Veröffentlichungstag und Bekanntmachung des Hinweises auf die Patenterteilung: **18.03.1998**
(21) Anmeldenummer: 95114235.5
(22) Anmeldetag: 11.09.1995
(51) Int. Cl.: F16H 55/14, F16D 3/68

(54) **Getriebeantrieb, insbesondere für Schneckengetriebe**
Gear drive, especially for worm gearings
Entraînement de transmission, notamment pour engrenage à vis sans fin

(30) Priorität: 23.09.1994 DE 9415460 U
(43) Veröffentlichungstag der Anmeldung: 27.03.1996
(73) Patentinhaber: SIEMENS AKTIENGESELLSCHAFT, 80333 München (DE)
(72) Erfinder: Luckas, Thomas, Dipl.-Ing. (FH), D-97273 Kürnach (DE)

(56) Entgegenhaltungen:
- DE-A- 2 153 411
- DE-A- 2 609 008
- DE-C- 452 047
- DE-C- 660 912
- DE-U- 1 968 378
- DE-U- 9 104 125
- FR-A- 1 172 645

## Beschreibung

Die Erfindung bezieht sich auf einen Getriebeantrieb, insbesondere Schneckengetriebe, gemäß Patentanspruch 1.

Ein Schneckengetriebe-Antrieb mit den Merkmalen a) und b) des Patentanspruchs 1 ist gemäß DE-U-91 04 125 bekannt; die Übergänge zwischen den äußeren Enden der im wesentlichen radial verlaufenden Stützrippen und dem Zahnkranz-Bund sind dabei bogenförmig abgerundet. Die Dämpfungszwischenlage besteht aus zwischen zwei tangential benachbarten Stützrippen eingelegten elastischen Puffern, zwischen die je ein Mitnahmesteg der Mitnahmescheibe eingreift gemäß Merkmal d); die elastischen Puffer liegen auch im unbelasteten Zustand tangential über den gesamten radialen Bereich an den Mitnahmestegen bzw. den Stützrippen an. Aus der DE-A-21 53 411 ist eine elastische Klanenkupplung bekannt, bei der tonnenförmige Dämpfungskörper Aufnähmeräume Voll ausfüllen, die durch radial vorstehende Klanen der Kupplungsscheiben begrenzt sind.

Gemäß Aufgabe vorliegender Erfindung soll bei schlanker Baugröße eine hohe Unempfindlichkeit gegenüber tangentialen Scherungs- bzw. radialen Verformungsbelastungen des vorzugsweise als Kunststoffspritzgußteil hergestellten Getrieberades sowie gegenüber partiellen Spannungsspitzenbelastungen der Dämpfungszwischenlage gewährleistet werden können.

Die Lösung dieser Aufgabe gelingt durch die Lehre des Anspruchs 1; vorteilhafte Ausgestaltungen dieser Erfindung sind jeweils Gegenstand der Unteransprüche.

Aufgrund der erfindungsgemäßen Ausbildung der Stützrippen wird einerseits der Anschlagdruck der Mitnehmerscheibe unter Vermeidung einer senkrecht auf die Stützrippen wirkenden Scherungskraft in unkritische tangentiale Zugbelastungen in den Zahnkranz-Bund umgelenkt und andererseits ein radialer Schwindungszug beim Spritzgießen des Getrieberades auf einen größeren tangentialen Bereich des Zahnrad-Bundes verteilt; bei Einsatz des Getrieberades als Schneckenrad in einem Schneckengetriebe wird der Abstützbereich der Schneckenverzahnung gegenüber der Stützrippe bzw. der Nabe in vorteilhafter Weise vergrößert, so daß sich trotz schlanker Baugröße Belastungsverformungen des Zahnkranzes vermeiden und somit ein gleichmäßigerer Lauf des Getriebeantriebs erreichen lassen.

Durch den abgerundeten Übergangsbereich der Stützrippen in den Zahnkranzbund lassen sich darüber hinaus in Verbindung mit als Dämpfungszwischenlage vorgesehenen elastischen Puffern mit spezifisch tonnenförmig ausgebildeter Außenkontur eine gleichmäßigere Anlage der Dämpfungszwischenlage bei einer Drehmitnahme erreichen und damit partielle Spannungsspitzen vermeiden, die ansonsten, insbesondere bei längeren Betriebsstandzeiten, zu Beschädigungen der Dämpfungszwischenlage führen würden.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: eine axiale Draufsicht auf die Stützrippen-Seite des Schneckenrades,
- FIG 2: das Schneckenrad gemäß FIG 1 im Schnittverlauf II-II,
- FIG 3: eine axiale Draufsicht auf die Mitnahmestege-Seite der Mitnehmerscheibe,
- FIG 4: die Mitnehmerscheibe gemäß FIG 3 im Schnittverlauf IV-IV,
- FIG 5: eine axiale Draufsicht auf eine Dämpfungszwischenlage mit betriebsmäßig zugeordneten elastischen Puffern,
- FIG 6: die Dämpfungszwischenlage gemäß FIG 5 im Schnittverlauf VI-VI,
- FIG 7: die axiale Draufsicht auf ein Schneckenrad mit betriebsmäßig eingelegter Dämpfungszwischenlage.

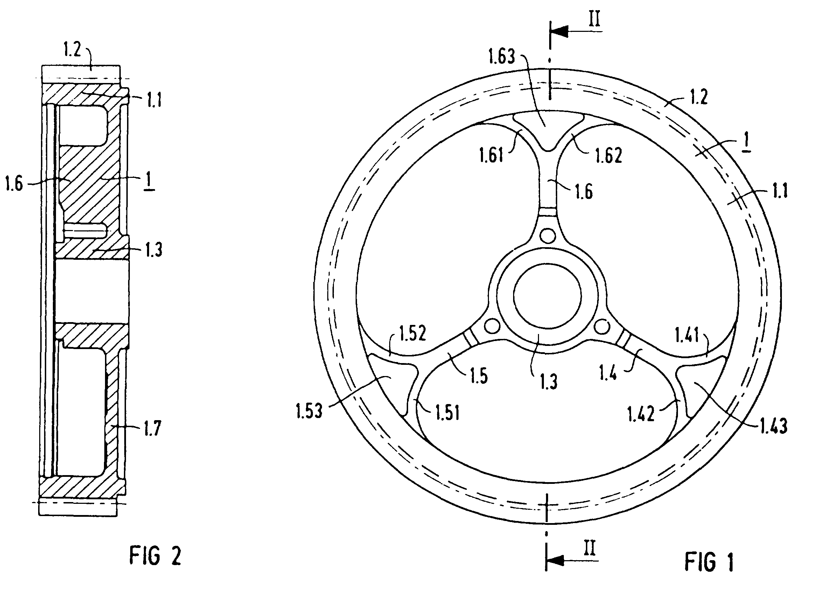

FIG 1,2 zeigen ein Getrieberad, das mit einer radial inneren Nabe 1.3 auf einer Getriebeachse drehbar gelagert ist und, in hier nicht näher dargestellter Weise, z.B. von einer Schnekkenwelle eines Schneckengetriebes angetrieben wird, die mit einem äußeren Zahnkranz 1.2 mit Schrägverzahnung kämmt, der von einem Zahnkranz-Bund 1.1 aufgenommen wird. Der radial äußere Zahnkranz-Bund 1.1 ist mit der radial inneren Nabe 1.3 über drei Stützrippen 1.4;1.5;1.6 verbunden.

Die Stützrippen 1.4-1.6 münden radial außen mit im wesentlich nur tangential belasteten Übergangsbogen 1.41,1.42;1.51, 1.52; 1.61,1.62 in den Zahnkranz-Bund 1.1, wobei zweckmäßigerweise die Übergangsbögen gabelförmig unter Freilassung eines Zwischenraums 1.43 bzw.1.53 bzw.1.63 in der einen bzw. anderen Umfangsrichtung mündenden Übergangsbögen geteilt sind. Zur einfachen axialen Aufbaumontage der in die Zwischenräume zwischen den Stützrippen einzulegenden Dämpfungszwischenlage weist das Schneckenrad 1 an seinem der zu montierenden Mitnehmerscheibe 2 gegenüberliegenden Stirnseite einen Schneckenradboden 1.7 auf, von dem die Stützrippen 1.4-1.6 axial hervorragen.

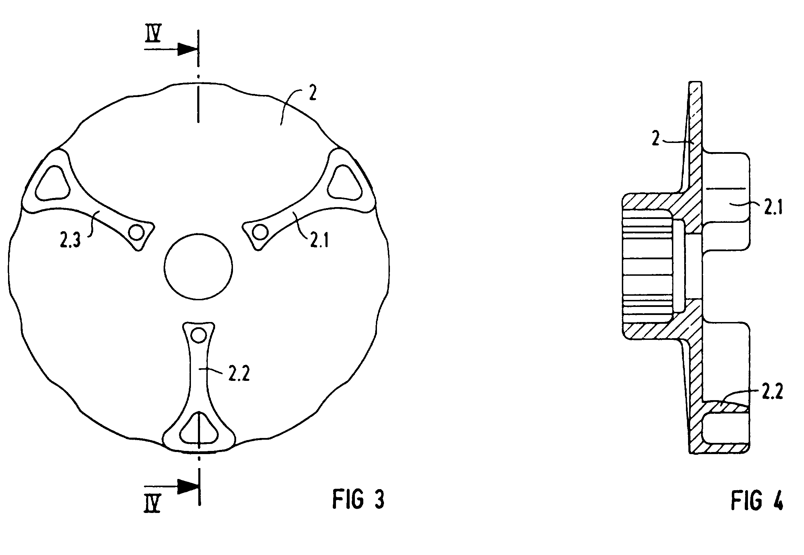

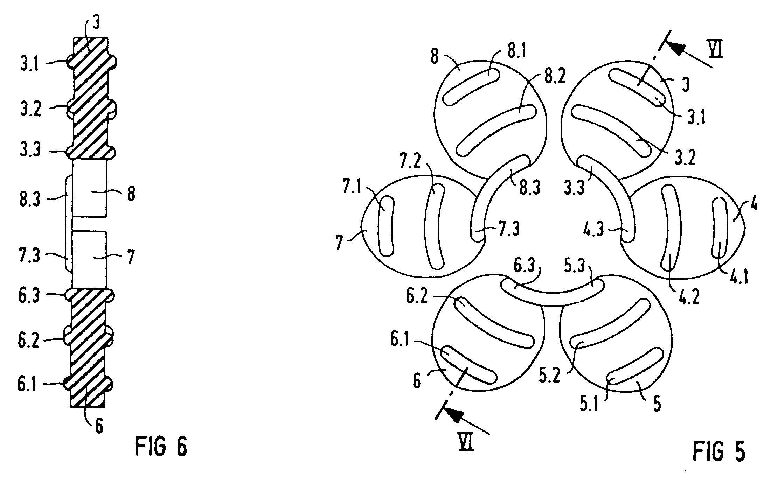

Die Dämpfungszwischenlage besteht gemäß FIG 5,6 aus elastischen Puffern 3;4 bzw.5;6 bzw.7;8 die vorzugsweise tonnenförmig ausgebildet sind und von denen jeweils zwei derart in die tangentiale zwischenräume zwischen zwei benachbarten Stützrippen einsteckbar sind, daß mittig zwischen jeweils zwei elastische Puffern die Mitnehmerscheibe 2 gemäß Abbildung FIG 3,4 mit ihren axial vorstehenden Mitnahmestegen 2.1 bzw.2.2 bzw.2.3 axial einsteckbar ist.

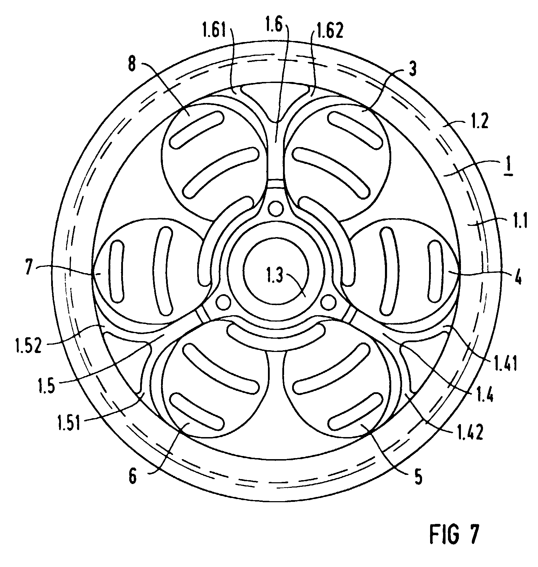

Die elastischen Puffer 3;4 bzw.5;6 bzw.7;8 sind mit einer im wesentlichen tonnenförmigen Außenkontur mit - wie insbes. aus der Zusammenbaudarstellung gemäß FIG 7 ersichtlich - im Sinne einer tangentialen Anlage im radial inneren und einer tangentialen Distanz im radial äußeren Bereich zu den Mitnahmestegen 2.1 bis 2.3 bzw. den Stützrippen 1.4-1.6 im jeweils unbelasteten Zustand derart ausgebildet, daß sie sich im radial äußeren Bereich erst bei einem tangentialen Anlagedruck in der einen oder anderen Richtung allmählich gegen die Außenkontur der gewölbten Übergangsbögen der Stützrippen an den Zahnradbund 1.1 anlegen und somit eine gleichmäßige, von partiellen Spannungsspitzen freie Belastung der Dämpfungszwischenlage gewährleisten.

Zum Toleranzausgleich der als Massenartikel gefertigten und anschließend zusammenbaubaren Teile des Schneckenrades 1 einerseits und der Mitnehmerscheibe 2 andererseits unter Zwischenlage der elastischen Puffer 3-8 sind nach einer weiteren Ausgestaltung der Erfindung an die Stirnseiten der elastischen Puffer, vorzugsweise einstückig, Distanzausgleichsstege 3.1-3.3 bzw.4.1-4.3 bzw.5.1-5.3 bzw.6.1-6.3 bzw.7.1-7.3 bzw.8.1-8.3 angeformt; in vorteilhafter Weise sind jeweils, vorzugsweise radial innen, überbrückende Distanzausgleichsstege 3.3;4.3 bzw.5.3;6.3 bzw.7.3;8.3 derart vorgesehen, daß zwei jeweils in einen gemeinsamen Zwischenraum zwischen zwei benachbarte Stützrippen einzulegende elastische Puffer im Sinne einer einteiligen Montageeinheit verbunden sind.

## Patentansprüche

1. Getriebeantrieb, insbesondere Schneckengetriebe, mit folgenden Merkmalen:
a) Ein antriebsseitiges Getrieberad, insbesondere Schneckenrad (1), steht über eine Dämpfungszwischenlage (3-8) in Drehmitnahme mit einer abtriebsseitigen Mitnehmerscheibe (2);
b) die Dämpfungszwischenlage (3-8) kommt bei der Drehmitnahme zur jeweils im wesentlichen tangentialen Anlage an Stützrippen (1.4-1.6) zwischen einem radial äußeren Zahnkranz-Bund (1.1) und einer radial inneren Nabe (1.3) des Schneckenrades (1) einerseits und an Mitnahmestege (2.1-2.3) der Mitnehmerscheibe (2) andererseits ;
c) die ansonsten im wesentlichen radial verlaufenden Stützrippen (1.4-1.6) münden radial außen mit im wesentlich nur tangential belasteten Übergangsbögen (1.41,1.42; 1.51, 1.52; 1.61,1.62) in den Zahnkranz-Bund (1.1);
d) die Dämpfungszwischenlage (3-8) besteht aus je zwei zwischen zwei tangential benachbarten Stützrippen eingelegten elastischen Puffern (3;4 bzw.5;6 bzw.7;8), zwischen die je ein Mitnahmesteg (2.1 bzw.2.2 bzw.2.3) der Mitnahmescheibe (2) eingreift;
e) die elastischen Puffer (3;4 bzw.5;6 bzw.7;8) sind mit einer im wesentlichen tonnenförmigen Außenkontur ausgebildet und derart angeordnet, daß sie im jeweils unbelasteten Zustand tangential
- im radial inneren Bereich an den Mitnahmestegen (2.1-2.3) bzw. Stützrippen (1.4-1.6) anliegen und
- im radial äußeren Bereich zu den Mitnahmestegen (2.1-2.3) bzw. Stützrippen (1.4-1.6) tangential beabstandet sind.

2. Getriebeantrieb nach dem vorhergehenden Anspruch mit dem Merkmal:
f) Die Stützrippen (1.4,1.6) sind radial außen gabelförmig in je einen, in der einen bzw. anderen Umfangsrichtung mündenden Übergangsbögen geteilt.

3. Getriebeantrieb nach Anspruch 1 und/oder 2 mit dem Merkmal:
g) Die elastischen Puffer (3;4 bzw.5,6 bzw.7;8) sind mit axial vorstehenden Distanzausgleichsstegen (3.1-3.3 bzw.4.1-4.3 bzw.5.1-5.3 bzw.6.1-6.3 bzw.7.1-7.3 bzw.8.1-8.3) versehen.

4. Getriebeantrieb nach Anspruch 3 mit dem Merkmal:
h) Je zwei, zwischen zwei benachbarte Stützrippen eingelegte elastische Puffer sind im Sinne einer einteiligen Montageeinheit mit einem, insbesondere radial innen angeordneten, Distanzausgleichssteg (3.3;4.3 bzw.5.3;6.3 bzw.7.3;8.3) verbunden.

5. Getriebeantrieb nach Anspruch 3 und/oder 4 mit dem Merkmal:
i) Die Distanzausgleichsstege sind einstückiger Bestandteil der elastischen Puffer.

## Claims

1. Gear drive, in particular a worm gear, having the following features:
a) a drive-end gear wheel, in particular a worm wheel (1), is in rotary driving engagement with an output-end driver disc (2) via an intermediate damping layer (3-8);
b) the intermediate damping layer (3-8), during the rotary driving, in each case comes to bear essentialy tangentially against supporting ribs (1.4-1.6) between a radiallly outer gear-rim flange (1.1) and a radially inner hub (1.3) of the worm wheel (1) on the one hand and against driving webs (2.1-2.3) of the driver disc (2) on the other hand;
c) the supporting ribs (1.4-1.6), which otherwise run essentially radially, lead radially on the outside into the gear-rim flange (1.1) by means of transition curves (1.41, 1.42; 1.51, 1.52; 1.61, 1.62) essentially loaded only tangentially;
d) the intermediate damping layer (3-8) comprises elastic cushions (3; 4 and 5; 6 and 7; 8 resp.) which are inserted in pairs between two tangentially adjacent supporting ribs and between which in each case a driving web (2.1 or 2.2 or 2.3 resp.) of the driver disc (2) engages;
e) the elastic cushions (3; 4 and 5; 6 and 7; 8 resp.) are formed with an essentially barrel-shaped outer contour and are arranged in such a way that, in each case in the unloaded state, they
- bear tangentially against the driving webs (2.1-2.3) and supporting ribs (1.4-1.6) respectively in the radially inner region and
- are at a tangential distance from the driving webs (2.1-2.3) and supporting ribs (1.4-1.6) respectively in the radially outer region.

2. Gear drive according to the preceding claim, having the feature:
f) the supporting ribs (1.4-1.6) are each split radially on the outside in a forked manner into transition curves leading out in the one or the other peripheral direction.

3. Gear drive according to Claim 1 and/or 2, having the feature:
g) the elastic cushions (3; 4 and 5; 6 and 7; 8 resp.) are provided with axially projecting distance-equalizing webs (3.1-3.3 and 4.1-4.3 and 5.1-5.3 and 6.1-6.3 and 7.1-7.3 and 8.1-8.3 resp.).

4. Gear drive according to Claim 3, having the feature:
h) two elastic cushions each, inserted between two adjacent supporting ribs, are connected like a one-piece assembly unit to a distance-equalizing web (3.3; 4.3 or 5.3; 6.3 or 7.3; 8.3 resp.), which in particular is arranged radially on the inside.

5. Gear drive according to Claim 3 and/or 4, having the feature:
i) the distance-equalizing webs are a one-piece component of the elastic cushions.

## Revendications

1. Dispositif d'entraînement de transmission, notamment de transmission à vis sans fin, ayant les caractéristiques suivantes :
a) une roue de transmission située du côté d'entraînement, notamment une roue (1) à vis sans fin, est en liaison d'entraînement en rotation avec un disque (2) d'entraînement situé du côté de sortie par l'intermédiaire d'une couche (3 à 8) intermédiaire d'atténuation ;
b) la couche (3 à 8) intermédiaire d'atténuation vient, lors de l'entraînement en rotation, s'appliquer de manière sensiblement tangentielle aux nervures (1.4 à 1.6) de soutien entre un collet (1.1) de couronne dentée radialement extérieure et un moyeu (1.3) radialement intérieur de la roue (1) à vis sans fin, d'une part, et à des barrettes (2.1 à 2.3) d'entraînement du disque (2) d'entraînement d'autre part,
c) les nervures (1.4 à 1.6) de soutien qui, pour le reste, s'étendent sensiblement radialement, débouchent radialement à l'extérieur par des arceaux (1.41, 1.42; 1.51, 1.52; 1.61, 1.62) de transition, qui ne sont soumis à une charge sensiblement que dans la direction tangentielle sur le collet (1.1) de couronne dentée;
d) la couche (3 à 8) intermédiaire d'atténuation est constituée, chaque fois de deux tampons (3;4 et 5;6 et 7;8) élastiques, qui sont insérés entre deux nervures de soutien tangentiellement voisines et entre lesquelles rentre une barrette (2.1 et 2.2 et 2.3) d'entraînement du disque (2) d'entraînement;
e) les tampons (3;4 et 5;6 et 7;8) élastiques sont réalisés en ayant un contour extérieur sensiblement en forme de tonnelet et sont montés de manière, en l'état non soumis à une charge,
- dans la zone radialement intérieure, à s'appliquer tangentiellement aux barrettes (2.1 à 2.3) d'entraînement et aux nervures (1.4 à 1.6) de soutien et
- dans la zone radialement extérieure, à être tangentiellement à distance des barrettes (2.1 à 2.3) d'entraînement et des nervures (1.4 à 1.6) de soutien.

2. Dispositif d'entraînement de transmission suivant la revendication précédente ayant la caractéristique suivante :
f) les nervures (1.4, 1.6) de soutien sont subdivisées radialement à l'extérieur en forme de fourche en arceau de transition débouchant dans l'une des directions périphérique et dans l'autre direction périphérique.

3. Dispositif d'entraînement de transmission suivant la revendication 1 et/ou 2 ayant la caractéristique :
g) les tampons (3;4 et 5, 6 et 7;8) élastiques sont munis de barrettes (3.1 à 3.3 et 4.1 à 4.3 et 5.1 à 5.3 et 6.1 à 6.3 et 7.1 à 7.3 et 8.1 à 8.3) de compensation de distance faisant saillies axialement.

4. Dispositif d'entraînement de transmission suivant la revendication 3 ayant la caractéristique :
h) chaque groupe de deux tampons élastiques insérés entre deux nervures de soutien voisines sont reliés à une barrette (3.3; 4.3 et 5.3; 6.3 et 7.3; 8.3) de compensation de distance, montée notamment radialement à l'intérieur, en vue de former une unité de montage d'une seule pièce.

5. Dispositif d'entraînement de transmission suivant la revendication 3 et/ou 4 comportant la caractéristique :
i) les barrettes de compensation de distance font partie d'une seule pièce des tampons élastiques.
